# EUROPEAN PATENT APPLICATION

(11) **EP 3 768 033 A1**
(43) Date of publication of application: **20.01.2021**
(21) Application number: 20181710.3
(22) Date of filing: 23.06.2020
(51) Int. Cl.: H04W 76/15, H04W 28/08, H04W 76/16

(54) **SELECTING AMONG VARIOUS DUAL CONNECTIVITY AND SINGLE CONNECTIVITY CONFIGURATIONS**

(30) Priority: 19.07.2019 US 201916516703
(71) Applicant: T-Mobile USA, Inc., Bellevue, WA 98006-1350 (US)
(72) Inventor: Kwok, Ming Shan, Bellevue, WA 98006-1350 (US); Karimli, Yasmin, Bellevue, WA 98006-1350 (US); Abdel Shahid, Wafik, Bellevue, WA 98006-1350 (US)
(74) Representative: Hanna Moore + Curley

(57) **Abstract**

Techniques for selecting between various dual connectivity and single connectivity configurations in wireless networks are discussed herein. Wireless networks may include a master base station, such as a Long-Term Evolution (LTE) base station, that may operate in conjunction with a secondary base station, such as a New Radio (NR) base station, to provide dual connectivity or single connectivity to user equipment (UE) operating in that environment. The type of connectivity may be selected according to various characteristics of available radio links and/or various characteristics of devices connecting to the available radio links. In some examples, the type of connectivity may be selected to reduce intermodulation distortion (IMD) or obviate IMD by selecting a connectivity type to avoid scenarios where IMD may be present.

## Description

### BACKGROUND

Cellular communication devices use network radio access technologies to communicate wirelessly with geographically distributed cellular base stations. Long-Term Evolution (LTE) is an example of a widely implemented radio access technology that is used in 4^{th} Generation (4G) communication systems. New Radio (NR) is a newer radio access technology that is used in 5^{th} Generation (5G) communication systems. Standards for LTE and NR radio access technologies have been developed by the 3rd Generation Partnership Project (3GPP) for use by wireless communication carriers.

One architecture option, along with a suite of communication protocols and operations defined by the 3GPP, is referred to as EN-DC (Evolved Universal Terrestrial Radio Access Network (E-UTRAN)/New Radio-Dual Connectivity). EN-DC enables the simultaneous use of LTE and NR radio access technologies for communications between a mobile device and a cellular communication network, and may also be referred to as LTE/NR dual connectivity. EN-DC is described by 3GPP Technical Specification (TS) 37.340.

EN-DC can be implemented using a 4G core network supporting both LTE (4G) and 5G (NR) base stations, in a configuration known as a Non-Standalone (NSA) architecture. In this configuration, a 4G LTE base station (referred to as a Master eNodeB or MeNB) is associated (e.g., via an X2 interface) with a 5G NR base station (referred to as a Secondary gNodeB or SgNB). In an NSA system, both the LTE base station and the NR base station are supported by a 4G core network. However, control communications are between the 4G core network and the LTE base station, and the LTE base station is configured to communicate with and to control the NR base station.

Another configuration includes a mobile device being connected to a single base station, such as a 5G NR base station, in what can be referred to as a Standalone (SA) architecture. In this configuration, control communications and data communications are between the mobile device and the NR base station.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIG. 1 illustrates an example environment implementing intelligent selection between various dual and single connectivity modes according to implementations of the present disclosure.
FIG. 2 illustrates another example environment implementing intelligent selection between various dual and single connectivity modes based on connection information, according to implementations of the present disclosure.
FIG. 3 illustrates examples of non-standalone and standalone connection types, according to various implementations of the present disclosure.
FIG. 4 illustrates an example environment including user equipment and various components implementing techniques for selecting between dual connectivity and single connectivity, as described herein.
FIG. 5 illustrates an example computing device to implement the connection selection, as described herein.
FIG. 6 illustrates an example process for selecting between various dual connectivity and single connectivity configurations, as described herein.

### DETAILED DESCRIPTION

The systems, devices, and techniques described herein are directed to selecting between various dual connectivity and single connectivity configurations in wireless networks. In some instances, the wireless networks may include a master base station (e.g., a Long-Term Evolution (LTE) base station) that may operate in conjunction with a secondary base station (e.g., a New Radio (NR) base station) to provide dual connectivity to user equipment (UE) operating in that environment. The type of connectivity may be selected according to various characteristics of available radio links and/or various characteristics of devices connecting to the available radio links. In some examples, the type of connectivity may be selected to reduce intermodulation distortion (IMD) or obviate IMD by selecting a connectivity type to avoid scenarios where IMD may be present.

For example, a user equipment (UE) may be configured to operate in a dual connectivity mode by connecting to a Fourth Generation (4G) base station and a Fifth Generation (5G) base station. In some examples, a UE may use dual connectivity on an uplink (and/or a downlink) transmission from the UE to a base station to increase a throughput associated with such a connection. However, as a transmission power of the uplink transmission increases, the uplink transmissions can cause IMD on the downlink channel, which may lead to reduced downlink throughput, increased noise, increase bit error rates, and the like. Accordingly, techniques include controlling a UE to switch from by and between various dual connectivity and single connectivity modes to mitigate or prevent effects of IMD on the UE.

In some examples, switching between various dual connectivity and single connectivity configurations can be based on a number of factors, including but not limited to, an uplink transmission power, a frequency associated with a master base station and/or a secondary base station, signal information (e.g., a strength of the signal from a base station, such as a downlink signal strength, including but not limited to a received signal strength indication (RSSI), reference signal received power (RSRP), reference signal received quality (RSRQ), signal-to-interference-plus-noise ratio (SINR), etc.), throughput (e.g., individual uplink and/or downlink throughput, aggregated (e.g., in a dual connectivity mode) uplink and/or downlink throughput, estimated throughput (e.g., an estimated SA throughput while in an NSA mode), etc.), traffic type (e.g., QCI, application type, voice or data traffic, latency requirements, bandwidth requirements, etc.), capability information (e.g., whether a UE is capable of dual connectivity and/or whether the UE is capable of communicating via a 5G protocol, etc.), a bit error rate, loading (e.g., loading at a master base station and/or a secondary base station), command(s) from a base station, determination(s) by a UE, and the like.

By way of example and without limitation, an environment can include a first base station (e.g., a 4G base station) and a second base station (e.g., a 5G base station) configured to provide NSA connections to UEs capable of such dual connectivity. In some examples, the first base station and/or the second base station discussed herein can use frequency resources in at least one of an LTE or 5G Band 71 (e.g., a 600 MHz band), an LTE Band 48 (e.g., 3500 MHz), and the like. In some instances, the frequency resources can include, but are not limited to, LTE or 5G Band 1 (e.g., 2080 MHz), LTE or 5G Band 2 (1900 MHz), LTE or 5G Band 3 (1800 MHz), LTE Band 4 (1700 MHz), LTE or 5G Band 5 (850 MHz), LTE or 5G Band 7 (2600 MHz), LTE or 5G Band 8 (900 MHz), LTE or 5G Band 20 (800 MHz), LTE or 5G Band 28 (700 MHz), LTE or 5G Band 38 (2600 MHz), LTE or 5G Band 41 (2500 MHz), LTE or 5G Band 50 (1500 MHz), LTE or 5G Band 51 (1500 MHz), LTE or 5G Band 66 (1700 MHz), LTE or 5G Band 70 (2000 MHz), LTE or 5G Band 74 (1500 MHz), 5G Band 257 (28 GHz), 5G Band 258 (26 GHz), 5G Band 260 (39 GHz), 5G Band 261 (28 GHz), and the like.

In some instances, frequency resources in the range of 600 MHz - 6000 MHz can be referred as "low-band" and "mid-band." In some instances, the frequency resources may include "millimeter wave" bands including, but not limited to 26 GHz, 28 GHz, 38 GHz, 60 GHz, and the like. The techniques discussed herein are applicable to any frequency resources, and are not limited to those expressly recited above. For example, in some cases, frequency resources can include any licensed or unlicensed bands. Other examples of frequency resources may include those associated with 2^{nd} Generation (2G) radio access technologies, 3^{rd} Generation (3G) radio access technologies, and the like.

A UE can use a NSA connection to connect to the first base station (e.g., the 4G base station) and the second base station (e.g., the 5G base station). In some examples, the UE can simultaneously transmit data via an uplink (UL) to the first and second base stations. In some examples, the UE can transmit an indication of a transmit power to the first and/or second base stations, which may include a connection control component to implement the techniques discussed herein. In some examples, the UE can further transmit indication(s) of an RSRP, RSRQ, throughput, latency, bit error rate, etc. to the connection control component. The connection control component may further receive network information such as loading information, available bandwidth, frequency resources, and the like.

In one example, the UE may be located in the environment such that a transmission power associated with the uplink channels (e.g., the 4G uplink and/or the 5G uplink) is relatively low, which may represent a scenario where the UE is relatively close to one or both of the first base station and the second base station. In another example, the UE may be located in the environment such that a transmission power associated with the uplink channels (e.g., the 4G uplink and/or the 5G uplink) is relatively high. In some examples, the connection control component can instruct the UE to switch from an NSA connection where the UE simultaneously transmits via the 4G and 5G uplinks to an NSA connection where the UE non-simultaneously transmits via the 4G and 5G uplinks. In another example, the connection control component can instruct the UE to switch from an NSA connection (e.g., either simultaneous or non-simultaneous UL transmissions) to a SA connection. That is, the connection control component can instruct the UE to switch from a NSA connection associated with the 4G and 5G base stations to a SA connection associated with the 5G base station.

In another example, a connection control component can be implemented in a UE. The UE can receive an instruction from a network-based connection control component to operate in a dual connectivity configuration. Based at least in part on network information, device information, and/or signal information, as discussed herein, the UE can determine to transmit via a single uplink transmission (e.g., via one of 4G wireless resources or 5G wireless resources), despite the UE being connected in a NSA configuration.

In some examples, the connection control component can select or otherwise determine a connection for a UE based on signal information and/or network information. For example, the connection control component can determine a throughput associated with the NSA connection (e.g., a NSA throughput) and an estimated throughput associated with the SA connection (e.g., an estimated SA throughput). When the estimated SA throughput is above a threshold, when the estimated SA throughput is greater than the NSA throughput, and/or when a difference between the SA throughput and the NSA throughput is less than a threshold, the connection control component can instruct the UE to switch from an NSA connection to a SA connection.

In some examples, the NSA throughput can be based on measured values (e.g., measured by the base station(s) and/or the UE). In some examples, the estimated SA throughput can be based at least in part on an RSRP and/or RSRQ associated with the 5G base station.

In some examples, the connection control component can be located in the first base station, the second base station, a 4G core network node, a 5G core network node, the UE, and the like.

The systems, devices, and techniques described herein can improve the intelligence switching between various dual connectivity and single connectivity configurations. Such techniques can reduce intermodulation distortion, which can otherwise reduce a quality of experience of a user equipment. In some examples, switching from a NSA connection to a SA connection can free up resources for other UEs in an environment that can use such resources that would be otherwise be in use. Switching from an NSA connection to a SA connection before encountering IMD can improve or maintain a downlink throughput, which might otherwise suffer if IMD was encountered by the UE. In some examples, switching from an NSA connection to a SA connection can save power resources at a UE by only having to power one radio associated with the SA connection. These and other improvements to the functioning of a computer and network are discussed herein.

The systems, devices, and techniques described herein can be implemented in a number of ways. In general, the techniques discussed herein may be implemented in any dual connectivity or multi connectivity environment, and are not limited to 2G, 3G, 4G, and/or 5G environments. In some examples, an LTE base station can be considered a master base station and an NR base station can be considered a secondary base station, and vice versa. In some instances, a core network can be represented as a 4G core network and/or a 5G core network. In some instances, the techniques can be implemented in standalone implementations (e.g., Option 1 and/or 2, as referred to by 3GPP) or in non-standalone implementations such as those referred to as Option 3, 4, 7, etc. by 3GPP. In some examples, the techniques discussed herein may be implemented outside a dual connectivity environment involving a single base station or network access technology and multiple bearers. Example implementations are provided below with reference to the following figures.

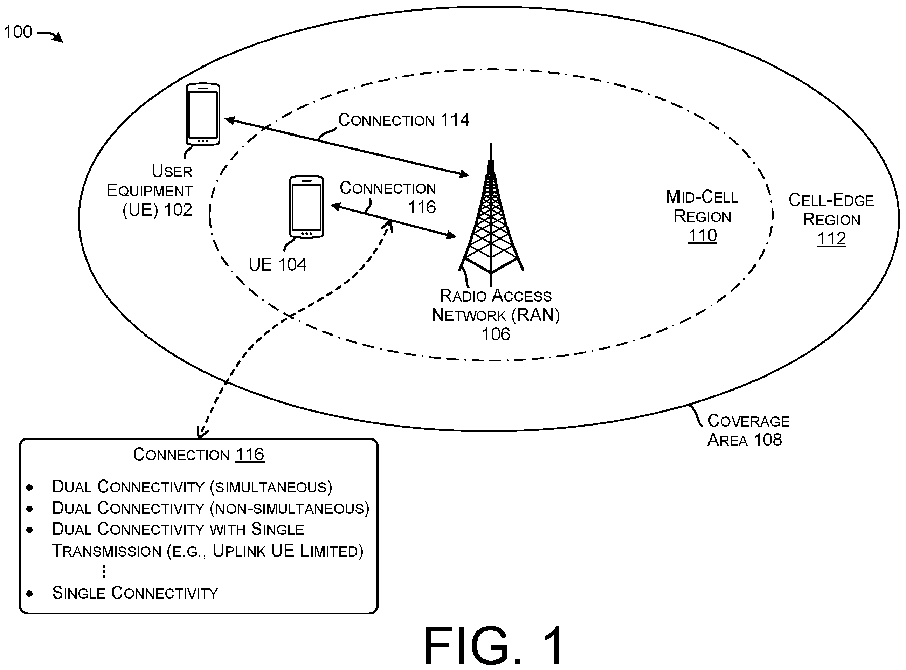

FIG. 1 illustrates an example environment 100 implementing intelligent selection between dual and single connectivity modes according to various implementations of the present disclosure.

As illustrated, environment 100 includes a first User Equipment (UE) 102 and a second UE 104. The terms "user equipment (UE)," "user device," "wireless communication device," "wireless device," "communication device," "mobile device," and "client device," can be used interchangeably to describe any UE (e.g., the first UE 102 and/or the second UE 104) that is capable of transmitting/receiving data wirelessly using any suitable wireless communications/data technology, protocol, or standard, such as Global System for Mobile communications (GSM), Time Division Multiple Access (TDMA), Universal Mobile Telecommunications System (UMTS), Evolution-Data Optimized (EVDO), Long Term Evolution (LTE), Advanced LTE (LTE+), New Radio (NR), Generic Access Network (GAN), Unlicensed Mobile Access (UMA), Code Division Multiple Access (CDMA), Orthogonal Frequency Division Multiple Access (OFDM), General Packet Radio Service (GPRS), Enhanced Data GSM Environment (EDGE), Advanced Mobile Phone System (AMPS), High Speed Packet Access (HSPA), evolved HSPA (HSPA+), Voice over IP (VoIP), VoLTE, Institute of Electrical and Electronics Engineers' (IEEE) 802.1x protocols, WiMAX, Wi-Fi, Data Over Cable Service Interface Specification (DOCSIS), digital subscriber line (DSL), CBRS, and/or any future Internet Protocol (IP)-based network technology or evolution of an existing IP-based network technology.

Examples of UEs (e.g., the first UE 102 and/or the second UE 104) can include, but are not limited to, smart phones, mobile phones, cell phones, tablet computers, portable computers, laptop computers, personal digital assistants (PDAs), electronic book devices, or any other portable electronic devices that can generate, request, receive, transmit, or exchange voice, video, and/or digital data over a network. Additional examples of UEs include, but are not limited to, smart devices such as televisions, refrigerators, washing machines, dryers, smart mirrors, coffee machines, lights, lamps, temperature sensors, leak sensors, water sensors, electricity meters, parking sensors, music players, headphones, or any other electronic appliances that can generate, request, receive, transmit, or exchange voice, video, and/or digital data over a network.

Any of the first UE 102 and the second UE 104 may be capable of supporting 4G radio communications, such as LTE radio communications, and 5G radio communications, such as New Radio (NR) communications. In some examples, either or both of the first UE 102 and the second UE 104 may be configured to support at least one of enhanced Mobile Broadband (eMBB) communications, Ultra Reliable Low Latency Communications (URLLCs), or massive Machine Type Communications (mMTCs). In some instances, the one or more devices can include at least one device supporting one or more of a sensor network, voice services, smart city cameras, gigabytes-in-a-second communications, 3D video, 4K screens, work & play in the cloud, augmented reality, industrial and/or vehicular automation, mission critical broadband, or self-driving cars.

The environment 100 further includes a Radio Access Network (RAN) 106 associated with a coverage area 108. The terms "RAN," "base station," "Access Point (AP)," or their equivalents, can refer to one or more devices that can transmit and/or receive wireless services to and from one or more UEs in a coverage area. For example, a RAN can be implemented as a variety of technologies to provide wired and/or wireless access to the network, as discussed herein. In some instances, a RAN can include a 3^{rd} Generation Partnership Project (3GPP) RAN, such a GSM/EDGE RAN (GERAN), a Universal Terrestrial RAN (UTRAN); and/or an Evolved UTRAN (E-UTRAN), or alternatively, a "non-3GPP" RAN, such as a Wi-Fi RAN, or another type of wireless local area network (WLAN) that is based on the IEEE 802.11 standards. Further, a RAN can include any number and type of transceivers and/or base stations representing any number and type of macrocells, microcells, picocells, or femtocells, for example, with any type or amount of overlapping coverage or mutually exclusive coverage.

In particular implementations, the coverage area 108 can correspond to a geographic region where wireless communications are supported by the RAN 106. For example, the coverage area 108 is a region where the RAN 106 can transmit and/or receive data wirelessly with other devices.

The RAN 106 may be capable of transmitting and/or receiving data wirelessly using a first radio technology and a second radio technology. As used herein, the term "radio technology" can refer to a type, technique, specification, or protocol by which data is transmitted wirelessly. In some cases, a radio technology can specify which frequency bands are utilized to transmit data. For instance, a "5G radio technology" can refer to the NR standard, as defined by 3GPP. In some cases, a "4G radio technology" can refer to the LTE radio standard, as defined by 3GPP.

In particular examples, the RAN 106 can utilize a 4G radio technology. The RAN 106 may transmit and receive data with a device located in the coverage area 108 over at least one first radio link (e.g., at least one LTE radio link) that is defined according to frequency bands included in, but not limited to, a range of 450 MHz to 5.9 GHz. In some instances, the frequency bands utilized for the first radio link(s) by the first RAN 106 can include, but are not limited to, LTE Band 1 (e.g., 2100 MHz), LTE Band 2 (1900 MHz), LTE Band 3 (1800 MHz), LTE Band 4 (1700 MHz), LTE Band 5 (850 MHz), LTE Band 7 (2600 MHz), LTE Band 8 (900 MHz), LTE Band 20 (800 MHz GHz), LTE Band 28 (700 MHz), LTE Band 38 (2600 MHz), LTE Band 41 (2500 MHz), LTE band 48 (e.g., 3500 MHz), LTE Band 50 (1500 MHz), LTE Band 51 (1500 MHz), LTE Band 66 (1700 MHz), LTE Band 70 (2000 MHz), LTE Band 71 (e.g., a 600 MHz band), LTE Band 74 (1500 MHz), and the like. In some examples, the first RAN 106 can be, or at least include, an eNodeB that can connect to devices in the coverage area 108 via the first radio link(s).

In some instances, the RAN 106 can also utilize a 5G radio technology, such as technology specified in the 5GNR standard, as defined by 3GPP. In certain implementations, the RAN 106 can transmit and receive communications with devices located in the coverage area 108 over at least one second radio link (e.g., at least one NR radio link) that is defined according to frequency resources including but not limited to 5G Band 1 (e.g., 2080 MHz), 5G Band 2 (1900 MHz), 5G Band 3 (1800 MHz), 5G Band 4 (1700 MHz), 5G Band 5 (850 MHz), 5G Band 7 (2600 MHz), 5G Band 8 (900 MHz), 5G Band 20 (800 MHz), 5G Band 28 (700 MHz), 5G Band 38 (2600 MHz), 5G Band 41 (2500 MHz), NR Band 48 (e.g., 3500 MHz), 5G Band 50 (1500 MHz), 5G Band 51 (1500 MHz), 5G Band 66 (1700 MHz), 5G Band 70 (2000 MHz), 5G Band 71 (e.g., a 600 MHz band), 5G Band 74 (1500 MHz), 5G Band 257 (28 GHz), 5G Band 258 (26 GHz), 5G Band 260 (39 GHz), 5G Band 261 (28 GHz), and the like. In some embodiments, the RAN 106 can be, or at least include, a gNodeB that can connect to devices in the coverage area 108 via the second radio link(s).

In some implementations, the RAN 106 is part of a Non-Standalone (NSA) architecture. For instance, the RAN 106 may include both a 4G transceiver (e.g., an eNodeB) by which the RAN 106 can establish LTE radio link(s) and a 5G transceiver (e.g., a gNodeB) by which the RAN 106 can establish NR radio link(s). In some cases, functions (e.g., transmission intervals, transmission power, etc.) of the 4G transceiver and the 5G transceiver are coordinated by the RAN 106. In some examples, the RAN 106 may include functionality to function as a Standalone (SA) architecture.

According to various implementations, the RAN 106 may communicate with a core network (not illustrated) that can include a 4G core network (e.g., an Evolved Packet Core (EPC)) and/or a 5G core network. Services may be relayed between the core network(s) and a device in the coverage area 108 by the RAN 106 via the first radio link(s) and/or the second radio link(s). In some cases, the core network can provide the services, in turn, to and from at least one Wide Area Network (WAN) (such as the Internet), an Internet Protocol (IP) Media Subsystem (IMS) network, and the like. In various implementations, the services can include voice services, data services, and the like.

The coverage area 108 may be divided into at least two regions, which are defined according to a distance from the RAN 106, a strength of at least one received signal from the RAN 106, a quality of wireless communications from the RAN 106, sources of attenuation in coverage area 108, and the like. The coverage area 108 may include a mid-cell region (also referred to as a "near-cell region") 110 and a cell edge region 112. In some instances, the mid-cell region 110 is less than a threshold distance from the RAN 106 and is a region where wireless communication with the RAN 106 is relatively strong. In certain instances, the cell-edge region 112 is more than a threshold distance from the RAN 106 and has an outer boundary that is defined by an outer boundary of the coverage area 108 associated with the RAN 106. In some instances, the cell-edge region 112 is a region where wireless communication with the RAN 106 is weaker than wireless communication in the mid-cell region 110. In some cases, a device's presence in the mid-cell region 110 and/or the cell-edge region 112 can be determined based on a strength (e.g., a power) of a signal received by the device from the RAN 106, based on a strength of a signal received by the RAN 106 from the device, or a combination thereof.

Although not illustrated in FIG. 1, it is possible that the coverage area 108 may be divided into first and second coverage areas corresponding to the first and second radio technologies. The first and second radio technologies may correspond to different transmission frequencies, which may correspond to different levels of frequency-dependent attenuation throughout the coverage area 108. For example, when the first radio technology is an LTE radio technology and the second radio technology is a NR radio technology, the coverage area corresponding to the LTE radio technology can be larger than the coverage area corresponding to the NR radio technology, due to the lower transmission frequencies associated with the LTE radio technology. However, as described with reference to FIG. 1, the first radio link(s) and the second radio link(s) may be assumed to be available throughout the entire coverage area 108.

By way of another examples, an NR signal may be associated with the entire coverage area 108 while the LTE signal may be associated with a relatively smaller coverage area. For example, the NR signal may be associated with a 600 MHz band while the LTE signal may be associated with a 3500 MHz band.

As illustrated in FIG. 1, each of the first UE 102 and the second UE 104 are located in the coverage area 108. Accordingly, the first UE 102 and the second UE 104 can be capable of transmitting and/or receiving data with the RAN 106 via the first radio link(s) and/or the second radio link(s). In various implementations, data can be exchanged between the RAN 106 and the first UE 102 and/or the second UE 104 via the first radio technology using the first radio link(s) and/or the second radio technology using the second radio link(s). In particular implementations, each of the first UE 102 and the second UE 104 can establish a connectivity mode with the RAN 106 among a first dual connectivity mode, in which both the first radio link(s) and the second radio link(s) are used to exchange data; a second dual connectivity mode, in which a UE may determine to use one of the first radio link(s) or the second radio link(s) for an uplink transmission despite both the first and second radio link(s) being available for transmission; a first single connectivity mode utilizing the first radio link(s) to exchange data without utilizing the second radio link(s); and a second single connectivity mode utilizing the second radio link(s) to exchange data without the first radio link(s).

In various implementations, a connectivity mode among the first dual connectivity mode, the second dual connectivity mode, the first single connectivity mode, and the second single connectivity mode can be intelligently selected for each of the first UE 102 and the second UE 104. Specifically, the connectivity mode for each of the first UE 102 and the second UE 104 can be selected to maximize expected user experience. In some cases, the selection can be performed by the RAN 106 or by a system connected to the RAN 106 (e.g., a device in the core network connected to the RAN 106 and one or more other RANs in a larger telecommunication network). In some cases, the first UE 102 and the second UE 104 can each intelligently select connectivity modes for themselves.

In particular implementations, the connectivity mode can be intelligently selected according to at least one network characteristic associated with the RAN 106. As used herein, the terms "network characteristic," "network condition," and their equivalents, can refer to a characteristic that is specific to a particular radio link, to a particular RAN, to a core network connected to the particular RAN, or to a WAN connected to the particular RAN. RAN 106 may be configured to determine the network characteristic(s). In some cases where a device other than the RAN 106 performs intelligent connectivity mode selection, the RAN 106 may transmit an indication of the network characteristic(s) to the device.

In various examples, the network characteristic(s) determined by the RAN 106 may include at least one of an available capacity, a congestion level, a latency, an allocated transmission power, and/or particular frequency resources. The network characteristic(s) may be characteristic(s) of the first radio link(s) and the second radio link(s). For instance, the network characteristic(s) may include a congestion level associated with the first radio link(s) and a congestion level associated with the second radio link(s).

In particular implementations, the connectivity mode for the first UE 102 and the connectivity mode for the second UE 104 can be selected based, at least in part, on the network characteristic(s). The network characteristic(s) may indicate an expected user experience for the first UE 102 in the dual connectivity mode and an expected user experience for the first UE 102 in either of the single connectivity modes. The network characteristic(s) may further indicate an expected user experience for the second UE 104 in the dual connectivity mode and an expected user experience for the second UE 104 in either of the single connectivity modes. In specific examples, if a loading or a congestion level associated with the second radio link(s) is above a particular threshold, a connectivity mode that utilizes the second radio link(s) may be associated with a lower user experience than a connectivity mode that does not utilize the first radio link(s). Although not illustrated, in these examples, the first single connectivity mode may be selected for both the first UE 102 and the second UE 104, so that communication over the congested second radio link(s) can be avoided.

In particular implementations, the connectivity mode for the first UE 102 can be intelligently selected according to at least one device characteristic associated with the first UE 102, and the connectivity mode for the second UE 104 can be intelligently selected according to at least one device characteristic associated with the second UE 104. As used herein, the terms "device characteristic," "device condition," and their equivalents, can refer to a feature specific to a device at a particular time. In some implementations, a device characteristic can include any of a radio condition experienced by the device, a location of the device, a trajectory of the device, a dynamic power sharing condition of the device, a battery level of the device, or a processing load on the device. In some instances, a device characteristic can include a distance between the device and a RAN. For example, a device characteristic can include whether the device is in a mid-cell region or a cell-edge region of the RAN.

In particular implementation, the connectivity mode for the UEs 102 and 104 can be selected according to at least one signal characteristic associated with the UE 102 and the UE 104, respectively. In some examples, a signal characteristic may include, but is not limited to, an uplink transmission power, a frequency associated with a master base station and/or a secondary base station, signal information (e.g., a strength of the signal from a base station, such as a downlink signal strength including but not limited to a received signal strength indication (RSSI), reference signal received power (RSRP), reference signal received quality (RSRQ), signal-to-interference-plus-noise ratio (SINR), etc.), throughput (e.g., individual uplink and/or downlink throughput, aggregated (e.g., in a dual connectivity mode) uplink and/or downlink throughput, estimated throughput (e.g., an estimated SA throughput while in an NSA mode), etc.), traffic type (e.g., QCI, application type, voice or data traffic, latency requirements, bandwidth requirements, etc.), a bit error rate, and the like.

Referring back to FIG. 1, a single connectivity mode may be selected for the first UE 102, since the first UE 102 is located in the cell-edge region 112. In particular implementations, the first UE 102 can determine a power of a wireless signal received from the RAN 106. In some cases, the first UE 102 and/or the RAN 106 can determine that the first UE 102 is in the cell-edge region 112 when the power is less than a particular threshold. Due to sources of attenuation and interference between the RAN 106 and the cell-edge region 112, a relatively high number of retransmissions may be expected between the RAN 106 and devices in the cell-edge region 112. These retransmissions can detrimentally affect network capacity. In order to reduce the number of retransmissions and improve network capacity, the single connectivity mode may be selected for the first UE 102 when the first UE 102 is located in the cell-edge region 112.

Accordingly, a connection 114 (e.g., a single connection) can be established between the first UE 102 and the RAN 106. The singular connection 114 may include at least one of the first radio link(s) or at least one of the second radio link(s).

On the other hand, a variety of connection types may be selected for the second UE 104, since the second UE 104 is located in the mid-cell region 110. For example, a connection 116 may be associated with one of a dual connectivity mode where the 4G and 5G uplink transmission are simultaneous, a dual connectivity mode where the 4G and 5G uplink transmission are non-simultaneous, a dual connectivity with a single transmission (e.g., where both bearers are established for the UE but the UE may determine to use a single one of a 4G or 5G connection for uplink transmission), or a single connectivity (e.g., where the connection is one or a 4G connection or a 5G connection). As noted herein, a connection control component can select a connectivity mode based on a dual connectivity throughput, an estimated standalone throughput, a level of estimated IMD, an RSRP, an RSRQ, a bit error rate, loading, a UE transmission power, and the like.

Accordingly, the connection 116 can be established between the second UE 104 and the RAN 106. The connection 116 may include at least one of the first radio link(s) and/or at least one of the second radio link(s).

Although intelligent connectivity mode selection can depend on a comparison between a threshold and a single network characteristic, a single device characteristic, and/or a single signal characteristic (as described above), in some cases, a connectivity mode can be selected based on multiple network, device, and/or signal characteristics. In certain implementations, metrics indicating expected user experiences associated with available connectivity modes can be calculated based on multiple network, device, and/or signal characteristics and compared to each other. The connectivity mode associated with the highest user experience metric can be selected.

The environment 100 can further implement intelligent transmission interval scheduling, in some cases. In particular implementations, since the dual connectivity mode has been selected for the second UE 104, at least one transmission interval associated with the first radio link(s) or the second radio link(s) is intelligently scheduled according to the network characteristic(s) and/or the device characteristic(s). For instance, if a battery level of the second UE 104 is determined to be below a particular threshold, a transmission interval for the first radio link(s) may be scheduled to be staggered with a transmission interval for the second radio link(s) in the time domain (e.g., non-simultaneous dual connectivity). In another embodiment, if the battery level of the second UE 104 is below the particular threshold, the UE 104 may determine to use a single uplink for transmissions despite being configured for a dual connectivity connection. Accordingly, the battery level of the second UE 104 can be conserved when the battery of the second UE 104 is relatively depleted.

However, if the battery level of the second UE 104 is determined to exceed the particular threshold, the transmission interval for the first radio link(s) may be scheduled to at least partially overlap with the transmission interval for the second radio link(s) in the time domain (e.g., simultaneous dual-connectivity). Accordingly, data throughput between the RAN 106 and the second UE 104 can be prioritized when the second UE 104 has a relatively large amount of stored battery power. The intelligent transmission interval scheduling for the second UE 104 can be performed by the RAN 106, by a device controlling the RAN 106, by the second UE 104, or a combination thereof.

As may be understood, the environment 100 may be implemented in accordance with any one of Option 3, 3a, 3x, 4, 4a, 7, 7a, and/or 7x, as defined by 3GPP. That is, the environment 100 may include a 5G core and/or may include additional data-plane or control-plane signaling. In general, the techniques discussed herein may be implemented in any dual connectivity or multi connectivity environment.

According to various implementations, the environment 100 can intelligently select connectivity modes for devices connected to the RAN 106 in order to maximize user experience. Furthermore, the environment 100 can intelligently schedule transmission intervals for dual connections in order to maximize user experience.

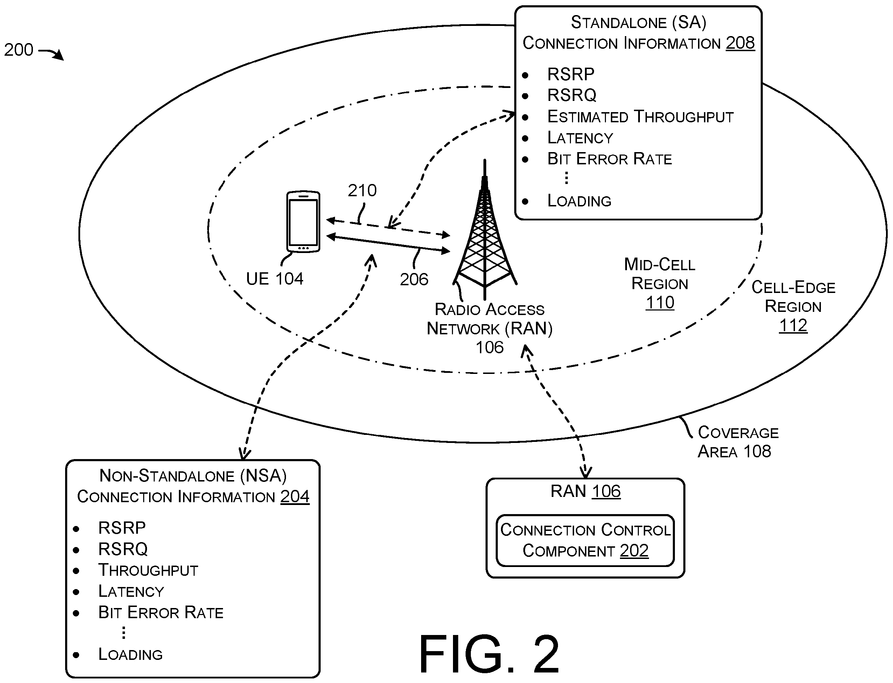

FIG. 2 illustrates another example environment 200 implementing intelligent selection between various dual and single connectivity modes based on connection information, according to various implementations of the present disclosure.

In some examples, the RAN 106 can include a connection control component 202 that can receive or otherwise determine connection information associated with the UE 104. For example, the connection control component 202 can determine non-standalone (NSA) connection information 204 associated with a dual connectivity connection 206 established between the UE 104 and the RAN 106.

Further, the connection control component 202 can receive or otherwise determine standalone (SA) connection information 208 associated with a singular connectivity connection 210. In some examples, the single connectivity connection 210 may not be established, as illustrated by the dashed line.

The connection control component 202 can receive the NSA connection information 204 and/or the SA connection information 208 and can determine to maintain the NSA connection 206 or to switch to the SA connection 210. For example, the NSA connection information 204 may indicate that the throughput associated with the NSA connection 206 is higher than an estimated throughput associated with the SA connection 210, and accordingly, may determine to maintain the NSA connection 206. In some examples, if the estimated throughput of the SA connection 210 is greater than or within a threshold amount of the NSA connection 210, the connection control component 202 may initiate the UE to switch from the NSA connection 206 to the SA connection 210.

In some examples, the non-standalone (NSA) connection information 204 may include, but is not limited to, one or more of RSRP (e.g., of an LTE signal, a SS-RSRP (synchronization state reference signal received power), CSI-RSRP (channel state information reference signal received power), etc.), RSRQ (e.g., LTE RSRQ, SS-RSRQ, CSI-RSRQ, etc.), SINR (e.g., SINR, SS-SINR, CSI-SINR, etc.), throughput, latency, bit error rate, loading (e.g., associated with a 4G base station and/or a 5G base station), and the like.

In some examples, the standalone (SA) connection information 208 may include, but is not limited to, one or more of RSRP (e.g., of an LTE signal, a SS-RSRP (synchronization state reference signal received power), CSI-RSRP (channel state information reference signal received power), etc.), RSRQ (e.g., LTE RSRQ, SS-RSRQ, CSI-RSRQ, etc.), SINR (e.g., SINR, SS-SINR, CSI-SINR, etc.), estimated throughput (e.g., associated with a 5G base station), latency, bit error rate, loading (e.g., associated with a 4G base station and/or a 5G base station), and the like.

In some examples, based at least in part on the NSA connection information 204 and/or the SA connection information 208, the connection control component 202 can signal to the UE 104 to switch between a dual connection using simultaneous transmission, a dual connection using non-simultaneous transmissions, and/or a dual connection using a single uplink transmission.

In some examples, the connection control component 202 can send a RRC reconfiguration message to the UE to change a transmission pattern and/or to switch from dual connectivity to single connectivity.

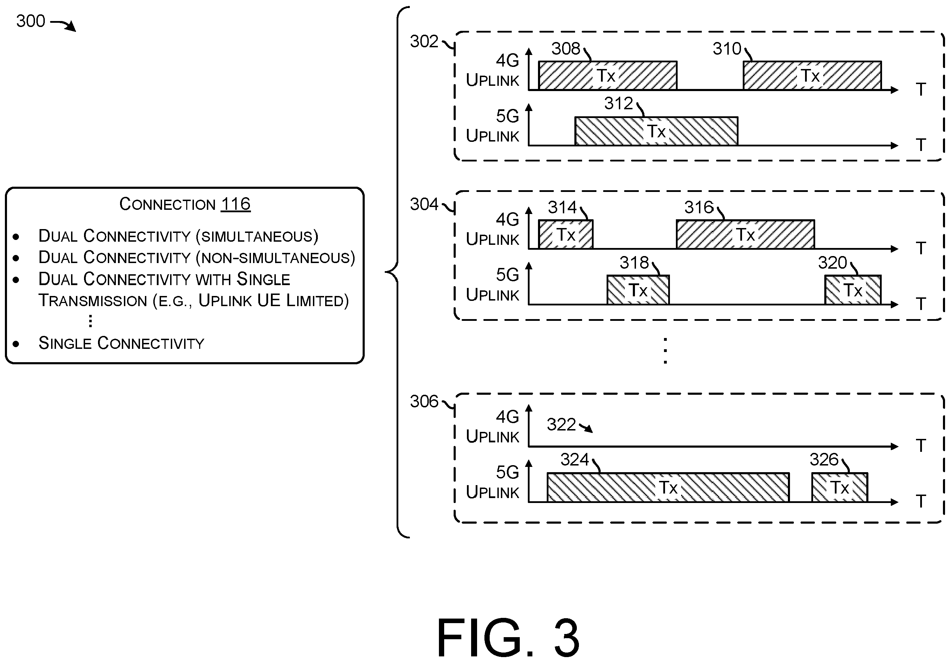

FIG. 3 is an illustration 300 of examples of non-standalone and standalone connection types, according to various implementations of the present disclosure.

As noted above, the connection 116 may comprise a dual connectivity connection with simultaneous uplink transmissions, a dual connectivity connection with non-simultaneous uplink transmissions, a dual connectivity connection associated with a single uplink transmission, or a single connectivity connection. Examples of various connections are illustrated as examples 302, 304, and 306.

The example 302 represents a dual connectivity connection with simultaneous uplink transmissions. For example, transmissions 308 and 310 represent uplink transmissions from a UE to a base station in accordance with a 4G radio access technology. A transmission 312 represents an uplink transmission from a UE to a base station in accordance with a 5G radio access technology. As illustrated in FIG. 3, the example 302 illustrates at least a portion of the transmissions 308 and 312 occurring substantially simultaneously. In some instances, even with a simultaneous dual connectivity, portions of transmissions 308, 310, and/or 312 may not occur substantially simultaneously. In some instances, the example 302 represents a non-standalone connection.

The example 304 illustrates a dual connectivity connection with non-simultaneous uplink transmissions. For example, transmissions 314 and 316 represent uplink transmissions from a UE to a base station in accordance with a 4G radio access technology. Transmissions 318 and 320 represents uplink transmissions from a UE to a base station in accordance with a 5G radio access technology. As illustrated in FIG. 3, the example 304 illustrates that the 4G uplink transmissions and the 5G uplink transmission occur non-simultaneously, which is to say, 4G uplink transmission and 5G uplink transmission are transmitted in non-overlapping time periods. In some instances, the transmission mode illustrated in the example 304 can be referred to as a type of time division multiplexing. In some instances, the example 304 represents a non-standalone connection.

The example 306 illustrates 1) a dual connectivity associated with a single uplink transmission and/or 2) a single connectivity connection. In this example, the portion 322 represents no transmission via a 4G uplink, while transmissions 324 and 326 represent uplink transmissions from a UE to a base station in accordance with a 5G radio access technology. In some instances, the example 306 represents a non-standalone connection where the UE determines to use a single uplink transmission. In some examples, the example 306 represents a standalone connection. In some examples, uplink transmissions may be provided by the 4G uplink instead of the 5G uplink.

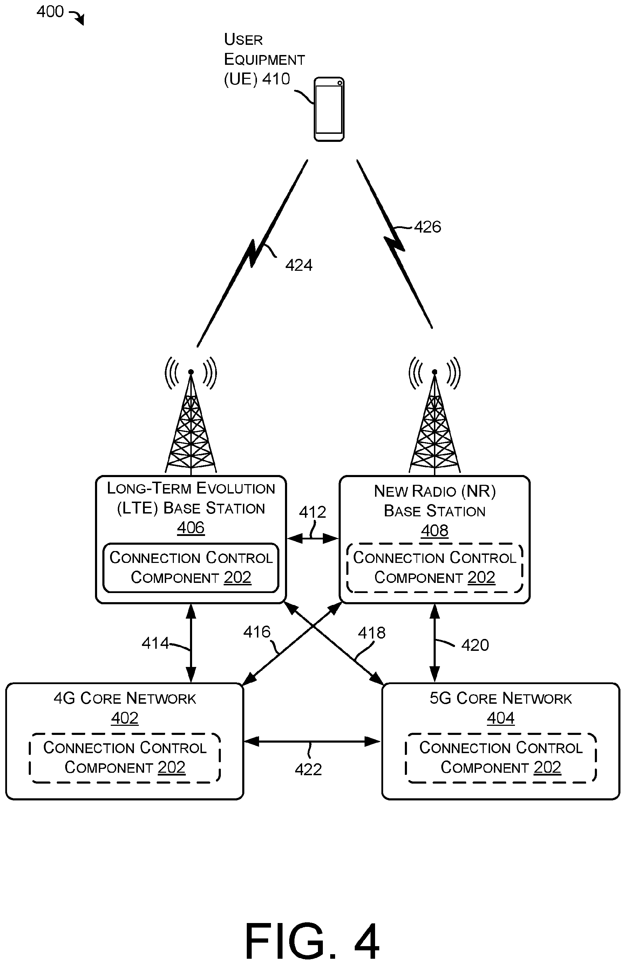

FIG. 4 illustrates an example environment 400 including user equipment and various components implementing techniques for selecting between various dual connectivity and single connectivity configurations, as described herein. The components shown in FIG. 4 may be used to implement dual connectivity, for use in a Non-Standalone (NSA) architecture configuration, for example. When using NSA, a communication device may use both an LTE bearer and an NR bearer (or a split bearer, for example) for uplink and downlink transmissions to and from respective LTE and NR base stations. In some instances, the LTE bearer can be used for control-plane messaging and for user-plane communications, while in some instances, the NR bearer can be used for additional user-plane bandwidth.

The components shown in FIG. 4 may further be used to implement single connectivity, for use in a Standalone (SA) architecture. When using SA, a communication device may be anchored to a NR base station and may use a 5G core (either exclusively or in conjunction with a 4G core).

As discussed herein, a 4G or LTE component is a component that performs according to 4G or LTE communications standards. A 4G or LTE signal or communication is a signal or communication that accords with 4G or LTE communications standards. A 5G or NR component is a component that performs according to 5G or NR communications standards. A 5G or NR signal or communication is a signal or communication that accords with 5G or NR communications standards. A 4G bearer or LTE bearer is a bearer associated with a 4G connection or an LTE connection (e.g., a MCG bearer (where the LTE base station is the master base station)). A 5G bearer to NR bearer is a bearer associated with a 5G connection or an NR connection (e.g., an SCG bearer (where the NR base station is the secondary base station)). In some instances, a UE may be connected via a 4G connection and a 5G connection (e.g., via dual connectivity) via an individual 4G bearers and 5G bearers or via a split bearer (e.g., a MCG split bearer or an SCG split bearer). Although often discussed in the context of 4G and 5G environments, the techniques discussed herein may be implemented in any dual connectivity, multi connectivity, or multiple bearer environment.

The environment 400 includes a 4G core network 402. Components of the 4G core network 402 may include one or more components implemented in accordance with 3GPP 4G specifications, including but not limited to a Mobility Management Entity (MME), a Serving Gateway (SGW), a Packet Data Network (PDN) Gateway (PGW), a Home Subscriber Server (HSS), an Access Network Discovery and Selection Function (ANDSF), an evolved Packet Data Gateway (ePDG), a Data Network (DN), and the like.

In some examples, the environment 400 can include a 5G core network 404. For instance, the 5G core network 404 may include any of an Access and Mobility Management Function (AMF), a Session Management Function (SMF), a Policy Control Function (PCF), an Application Function (AF), an Authentication Server Function (AUSF), a Network Slice Selection Function (NSSF), a Unified Data Management (UDM), a Network Exposure Function (NEF), a Network Repository Function (NRF), a User Plane Function (UPF), a DN and the like.

FIG. 4 also shows a 4G LTE base station 406, a 5G NR base station 408, and user equipment (UE) 410. In some examples, the base stations 406 and 408 can correspond to the RAN 106 of FIG. 1. In some examples, the UE 410 can correspond to the UEs 102 and/or 104.

Further, the LTE base station 406 can include a connection control component 202. In some instances, the connection control component 202 can receive or otherwise determine network information, device information, and/or signal information, as discussed herein, and can determine when to switch between various dual connectivity and/or single connectivity configurations. In some examples, the connection control component 202 can determine when to switch between a single connectivity and dual connectivity (and/or can select between simultaneous, non-simultaneous, and/or single uplink transmission modes).

Although discussed as residing in the LTE base station 406, the connection control component 202 can be located in a standalone computing device or in any devices or components illustrated in the environment 400.

Control plane communication channels and/or data plane communication channels between the base stations the components of the 4G core network (and additional components) are illustrated as channels 412, 414, 416, 418, 420, and 422. Wired or wireless communications between the cellular communication device and the base stations are shown connections 424 and 426. Further, control plane and/or data plane communications may be transmitted and/or received via any wired or wireless transmission paths.

The LTE base station 406 and the NR base station 408 may in some cases be associated with each other by being co-located at a single cell site. Although only a single pair of base stations is shown in FIG. 4, the environment 400 may include multiple cell sites, some of which might have both an LTE base station and an NR base station. In some instances, at least a portion of a geographic coverage area associated with the LTE base station 406 can overlap with a geographic coverage area associated with the NR base station 408.

In some instances, the LTE base station 406 is not limited to LTE technology, and may be referred to generally as a first base station 406. In some instances, the NR base station 408 is not limited to NR technology, and may be referred to generally as a second base station 408. In some instances, depending on an implementation, the LTE base station 406 can be referred to as a master base station while the NR base station 408 can be referred to as a secondary base station. In some instances (e.g., in a MR-DC context), depending on an implementation (e.g., Option 4), the LTE base station 406 can be referred to as a secondary base station while the NR base station 408 can be referred to as a master base station. In some instances, the LTE base station 406 and the NR base station 408 may be referred to as a base station 406 and a base station 408, respectively.

In some examples, the connection control component 202 can utilize the LTE base station 406 and the NR base station 408 simultaneously (or non-simultaneously) for a single communication or for multiple communications with the UE 410. For example, in some instances, uplink data or downlink data can be assigned independently to the LTE base station 406 or the NR base station 408. Further, in some examples, a first communication (e.g., a voice session) of the UE 410 can be handled by the LTE base station 406, while a second communication (e.g., a data session) can be handled by the NR base station 408. Of course, the examples are illustrative and are not intended to be limiting.

Although the UE 410 is described as communicating through a single cell site using both LTE and NR communications, it may be that in certain situations the LTE communications are through an LTE base station of a first cell site and the NR communications are through an NR base station of another cell site.

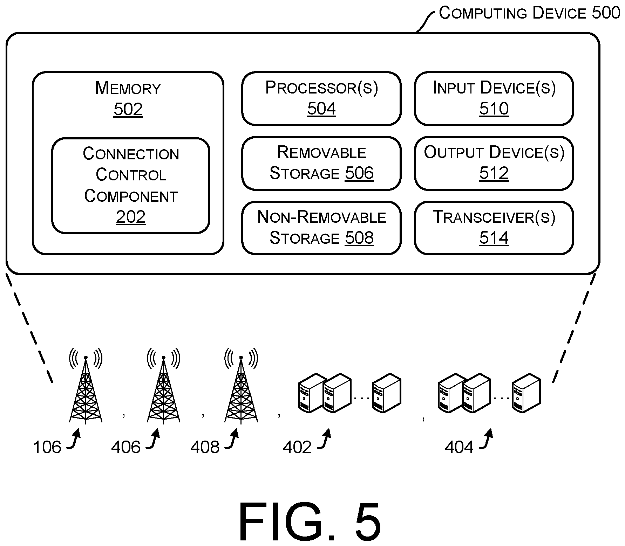

FIG. 5 illustrates an example computing device 500 to implement the connection selection, as described herein. In some embodiments, the computing device 500 can correspond to the RAN 106, the base stations 406 and/or 408, the 4G core network 402, and/or the 5G core network 404. It is to be understood in the context of this disclosure that the computing device 500 can be implemented as a single device, as a plurality of devices, or as a system with components and data distributed among them.

As illustrated, the computing device 500 comprises a memory 502 storing the connection control component 202 discussed herein. Also, the computing device 500 includes processor(s) 504, a removable storage 506 and non-removable storage 508, input device(s) 510, output device(s) 512, and transceiver(s) 514.

In various embodiments, the memory 502 is volatile (such as RAM), non-volatile (such as ROM, flash memory, etc.) or some combination of the two. The connection control component 202 stored in the memory 502 can comprise methods, threads, processes, applications or any other sort of executable instructions. The connection control component 202 can also include files and databases.

In general, and as described herein, the connection control component 202 can determine when to switch to or from a dual connectivity connection with simultaneous uplink, a dual connectivity connection with non-simultaneous uplink, a dual connectivity connection using a single uplink transmission, or a singular connectivity connection. For example, switching between connection types can be based at least in part on network information, device information, and/or signal information. Aspects of the connection control component 202 are discussed throughout this disclosure.

In some embodiments, the processor(s) 504 is a central processing unit (CPU), a graphics processing unit (GPU), or both CPU and GPU, or other processing unit or component known in the art.

The computing device 500 also includes additional data storage devices (removable and/or non-removable) such as, for example, magnetic disks, optical disks, or tape. Such additional storage is illustrated in FIG. 5 by removable storage 506 and non-removable storage 508. Tangible computer-readable media can include volatile and non-volatile, removable and non-removable media implemented in any method or technology for storage of information, such as computer readable instructions, data structures, program modules, or other data. The memory 502, the removable storage 506 and the non-removable storage 508 are all examples of computer-readable storage media. Computer-readable storage media include, but are not limited to, RAM, ROM, EEPROM, flash memory or other memory technology, CD-ROM, digital versatile discs (DVD), content-addressable memory (CAM), or other optical storage, magnetic cassettes, magnetic tape, magnetic disk storage or other magnetic storage devices, or any other medium which can be used to store the desired information and which can be accessed by the computing device 500. Any such tangible computer-readable media can be part of the computing device 500.

The computing device 500 may be configured to communicate over a telecommunications network using any common wireless and/or wired network access technology. Moreover, the computing device 500 may be configured to run any compatible device operating system (OS), including but not limited to, Microsoft Windows Mobile, Google Android, Apple iOS, Linux Mobile, as well as any other common mobile device OS.

The computing device 500 also can include input device(s) 510, such as a keypad, a cursor control, a touch-sensitive display, voice input device, etc., and output device(s) 512 such as a display, speakers, printers, etc. These devices are well known in the art and need not be discussed at length here.

As illustrated in FIG. 5, the computing device 500 also includes one or more wired or wireless transceiver(s) 514. For example, the transceiver(s) 514 can include a network interface card (NIC), a network adapter, a LAN adapter, or a physical, virtual, or logical address to connect to various networks, devices, or components illustrated in the environment 400, for example. To increase throughput when exchanging wireless data, the transceiver(s) 514 can utilize multiple-input/multiple-output (MIMO) technology. The transceiver(s) 514 can comprise any sort of wireless transceivers capable of engaging in wireless, radio frequency (RF) communication. The transceiver(s) 514 can also include other wireless modems, such as a modem for engaging in Wi-Fi, WiMAX, Bluetooth, infrared communication, and the like.

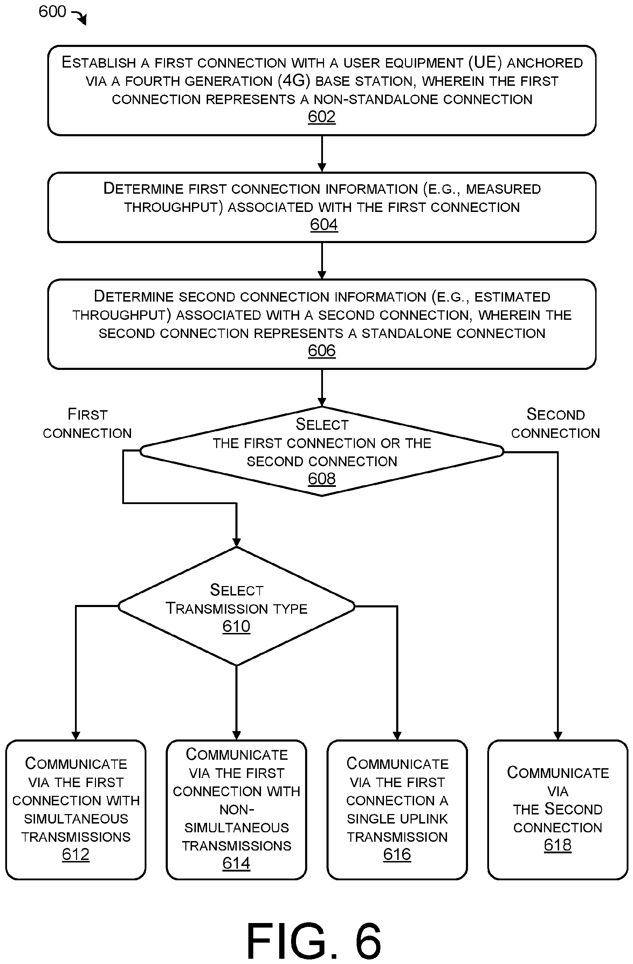

FIG. 6 illustrates an example process in accordance with embodiments of the disclosure. This process is illustrated as logical flow graphs, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be combined in any order and/or in parallel to implement the process.

FIG. 6 illustrates an example process 600 for selecting between various dual connectivity and single connectivity configuration, as described herein. The example process 600 can be performed by the connection control component 202 (or another component), in connection with other components and/or devices discussed herein. Some or all of the process 600 can be performed by one or more devices or components in the environments 100, 200, or 400, for example.

At operation 602, the process can include establishing a first connection with a user equipment (UE) anchored via a Fourth Generation (4G) base station, wherein the first connection represents a non-standalone connection. In some examples, the first connection can include a connection associated with a 5G base station to provide dual connectivity to the UE. In some examples, the first connection can comprise a 4G bearer and a 5G bearer or a split bearer to support dual connectivity.

At operation 604, the process can include determining first connection information (e.g., measured throughput) associated with the first connection. In some examples, the measured throughput can represent a throughput of a downlink between the 4G base station and the UE and/or a 5G base station and the UE. In some examples, the measured throughput can represent a throughput of an uplink between the 4G base station and the UE and/or a 5G base station and the UE. In some examples, a measured throughput can correspond to an aggregated uplink and downlink throughput for a 4G connection and/or a 5G connection.

In some examples, the first connection information can comprise network information, device information, and/or signal information. For example, the first connection information can comprise an RSRP, RSRP, SINR, RSSI, bandwidth, bit error rate, latency, loading information, and the like associated with the first connection.

At operation 606, the process can include determining second connection information (e.g., estimated throughput) associated with a second connection, wherein the second connection represents a standalone connection. For example, the estimated throughput can represent an estimated throughput of a standalone (5G) connection between the UE and a base station after switching from the NSA connection (the first connection) to the SA connection (the second connection).

In some examples, the connection control component 202 can estimate the throughput based at least in part on the second connection information. For example, the second connection information may include a frequency associated with the second connection, a RSRP/RSRQ/SINR associated with a 5G uplink, and the like.

At operation 608, the process can include selecting the first connection or the second connection for the UE. In the event the first connection is selected (e.g., the left branch of operation 608), the process continues to operation 610.

At operation 610, the process can include selecting a transmission type. For example, the transmission type may include a simultaneous transmission, a non-simultaneous transmission, and/or a dual connectivity connection with a single uplink. An example of a simultaneous transmission is illustrated as example 302 in FIG. 3. An example of a non-simultaneous transmission is illustrated as example 304 in FIG. 3. An example of a single uplink in a dual connectivity configuration is illustrated as example 306 (in some examples) in FIG. 3. In the event the simultaneous transmission is selected (e.g., the left branch of operation 610), the operation 612 can include communicating via the first connection with simultaneous transmission. In the event the non-simultaneous transmission is selected (e.g., the middle branch of the operation 610), the operation 614 can include communicating via the first connection with non-simultaneous transmission. In the event the single uplink transmission is selected (e.g., the right branch of the operation 610), the operation 616 can include communicating via the first connection with a single uplink transmission.

In some examples, the operation 610 can include sending an instruction or a command to the UE to begin (or continue) transmitting in accordance with the selected transmission pattern. In some examples, the UE may select a transmission type based on various network characteristics, device characteristics, and/or signal characteristics, as discussed herein.

Returning to the operation 608, if the second connection is selected (e.g., the right branch of the operation 608), the process continues to operation 618 which can include communicating via the second connection. For example, the operation 618 can include setting up a standalone communication via a 5G base station and terminating the dual connectivity connection.

Thus, the techniques described herein may provide an improved user experience while preventing or reducing intermodulation distortion.

### CONCLUSION

Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A method comprising:
establishing a first connection with a user equipment, UE, wherein the first connection is anchored via a first base station, and wherein first user plane data is communicated via the first base station and a second base station;
determining a throughput associated with the first connection;
determining an estimated throughput associated with a second connection, wherein the second connection is to be anchored via the second base station, and wherein second user plane data is to be communicated via the second base station;
determining that the estimated throughput is higher than the throughput; and
establishing, based at least in part on the estimated throughput being higher than the throughput, the second connection with the UE and the second base station.

2. The method of claim 1, wherein:
the first base station is an eNodeB; and
the second base station is a gNodeB.

3. The method of claim 1 or 2, wherein:
the first base station is associated with a first frequency band;
the second base station is associated with a second frequency band; and
the second frequency band is lower than the first frequency band.

4. The method of any preceding claim, wherein:
the first base station and the second base station are associated with a same frequency band.

5. The method of any preceding claim, further comprising:
determining an intermodulation distortion, IMD, level associated with the first connection;
determining that the IMD level is above a threshold level; and
establishing the second connection further based at least in part on the IMD level being above the threshold level.

6. The method of any preceding claim, wherein:
the first connection is associated with a non-standalone architecture; and
the second connection is associated with a standalone architecture.

7. The method of any preceding claim, further comprising at least one of:
in association with the first connection, sending a first command to the UE to transmit data to the first base station and the second base station substantially simultaneously; or
in association with the first connection, sending a second command to the UE to transmit data to the first base station and the second base station in non-overlapping time periods.

8. The method of any preceding claim, further comprising:
in association with the first connection, receiving an indication from the UE that the UE is transmitting using a single uplink transmission.

9. The method of any preceding claim wherein the first base station is a Fourth Generation, 4G, base station and the second base station is a Fifth Generation, 5G, base station.

10. The method of claim 9 wherein:
the 4G base station is associated with a first frequency band;
the 5G base station is associated with a second frequency band; and
the second frequency band is lower than the first frequency band.

11. A system comprising:
one or more processors;
a memory; and
one or more components stored in the memory and executable by the one or more processors to perform the method of any preceding claim.

12. A non-transitory computer-readable medium storing instructions that, when executed, cause one or more processors to perform the method of any one of claims 1 to 10.
